# EUROPÄISCHE PATENTSCHRIFT

(11) **EP 1 503 125 B1**
(45) Veröffentlichungstag und Bekanntmachung des Hinweises auf die Patenterteilung: **10.12.2008**
(21) Anmeldenummer: 04014095.6
(22) Anmeldetag: 16.06.2004
(51) Int. Cl.: F16L 7/02

(54) **Anordnung zur Fixierung von Leitungen**
Assembly for the fixation of tubes
Ensemble pour la fixation des lignes

(30) Priorität: 31.07.2003 DE 20311837 U
(43) Veröffentlichungstag der Anmeldung: 02.02.2005
(73) Patentinhaber: Reiku GmbH, 51674 Wiehl-Bomig (DE)
(72) Erfinder: Rumpel, Jürgen, 51580 Reichshof-Mittelagger (DE)
(74) Vertreter: Glawe, Delfs, Moll

(56) Entgegenhaltungen:
- EP-A- 0 144 602
- EP-A- 1 101 992
- DE-A- 3 814 215
- GB-A- 1 594 321
- US-B1- 6 352 369

## Beschreibung

Die Erfindung betrifft eine Anordnung zum geordneten Halten der Einzelleitungen eines Leitungsbündels. Ein Fixierstück für eine solche Anordnung kann auch als Klemmstück, Abstandshaltestück oder Bündelunterteilungsstück bezeichnet werden. Es dient dazu, für die Einzelleitungen eines Leitungsbündels eine Vielzahl von Durchlässen oder Aufnahmen zur Verfügung zu stellen, in denen die Einzelleitungen in geordneter Anordnung geführt und auf Abstand gehalten und gegebenenfalls auch geklemmt, d.h. in Längsrichtung fixiert werden. Die Erfindung bezieht sich auf die Anordnung eines Fixierstücks an einem als Kabelschutzrohr dienenden Wellrohr.

Ein bevorzugtes, aber nicht ausschließliches Anwendungsgebiet des erfinduhgsgemäßen Fixierstücks ergibt sich bei an Industrierobotern oder Manipulatoren installierten Leitungsbündeln. Derartige Leitungsbündel an einem Industrieroboter zur Versorgung des bewegten Roboterwerkzeugs können zum Beispiel elektrische Stromkabel, elektrische Signalleitungen, hydraulische oder pneumatische Druckmittelleitungen, Kühlmittelleitungen usw. umfassen. Das Leitungsbündel muss hinreichend flexibel und an dem Roboter an geeigneten Stellen gehalten und fixiert sein, um den Bewegungen des Roboterarms bzw. Auslegers und des Werkzeugs folgen zu können.

Aus EP-1 101 992 A2 ist ein Fixierstück bekannt, welches die Funktion eines Dichtungszylinders zum Abdichten eines Hohlraums einer Durchführung hat und zu diesem Zweck an seinem Außenumfang eine Anzahl umlaufender flexibler Dichtlippen aufweist, die sich abdichtend an die glatte zylindrische Innenwandung des Hohlraums anlegen. Der Dichtungszylinder besteht aus durch Feuchtigkeit oder Flüssigkeit quellbarem Material, durch dessen Quellen die abdichtende Anlage der Dichtlippen an der Hohlraumwandung verstärkt wird. Dieser bekannte Dichtungszylinder ist nicht zur Verwendung in einem als Wellrohr ausgebildeten Kabelschutzrohr geeignet.

Aus EP-A-0 144 602 ist es bekannt, ein Kabelbündel an einem Roboter mittels einer oder mehrerer Halterungen zu führen, die an geeigneten Stellen des Roboters drehbar befestigt sind. Jede Halterung ist nach beiden Seiten hin trichterförmig offen und enthält in der Mitte ein Fixierstück mit bohrungsartigen Aufnahmen für das Halten bzw. Führen der Einzelleitungen des Leitungsbündels. Dieses bekannte Fixierstück ist jedoch nur als Einsatz einer drehbaren Halterung des Leitungsbündels verwendbar und kann somit nicht außerhalb einer solchen Halterung dort eingesetzt werden, wo sich das Leitungsbündel zwischen derartigen Halterungen oder zwischen einer Halterung und dem Roboterwerkzeug erstreckt. Ferner eignet sich das bekannte Fixierstück nicht für die Verwendung bei Leitungsbündeln, die von einem als Wellrohr ausgebildeten Kabelschutzrohr umgeben sind.

Das Dokument WO-A-01/01535 offenbart ein vorzugsweise zur Verlegung im Boden bestimmtes Wellrohr, welches auf seiner ganzen Länge von einem Innenprofil durchzogen ist, das den Wellrohrquerschnitt in eine Anzahl kleinerer rohrförmiger Querschnitte unterteilt, in welche Leitungen, wie zum Beispiel Glasfaserkabel oder Elektrokabel, eingezogen werden können. Ein solches, auf seiner ganzen Länge eine Querschnittsunterteilung aufweisendes Wellrohr ist jedoch nicht mit einem Fixierstück der genannten Art, welches zum punktuellen Fixieren der Einzelleitungen eines Leitungsbündels dient, vergleichbar.

Der Erfindung liegt die Aufgabe zugrunde, eine Anordnung mit einem Fixierstück für die Einzelleitungen von Leitungsbündeln vorzuschlagen, welches zur Verwendung in Kombination mit einem als Kabel- oder Leitungsschutzrohr dienendem Wellrohr ausgebildet ist.

Die erfindungsgemäße Lösung der Aufgabe ist in Anspruch 1 angegeben. Die übrigen Ansprüche beziehen sich auf vorteilhafte weitere Merkmale der Erfindung.

Das Fixierstück wird an beliebiger Stelle mit einem als Leitungsschutzrohr dienenden Wellrohr verbunden, um zum Beispiel zu Beginn und/oder Ende einer Wellrohrstrecke einen Fixierpunkt für das geordnete Fixieren und Halten der Einzelleitungen des im Wellrohr verlaufenden Leitungsbündels zu schaffen. Der Einsatzort des Fixierstücks ist nicht auf solche Stellen beschränkt, wo das Leitungsbündel durch Halter an einer Unterlage oder dergleichen befestigt ist.

Eine Ausführungsform der Erfindung wird anhand der Zeichnungen näher erläutert. Es zeigt:
- Fig. 1 und 2: ein Fixierstück in Frontansicht und Seitenansicht;
- Fig. 3: einen Radialschnitt nach der Linie B-B von Fig. 2;
- Fig. 4: einen Axialschnitt nach der Linie A-A von Fig. 1;
- Fig. 5: eine vergrößerte Einzelheit bei X in Fig. 2;
- Fig. 6: in Seitenansicht die Anordnung eines Wellrohrs mit einem Fixierstück und einem beide verbindenden Verschleißschutzring;
- Fig. 7: die Anordnung gemäß Fig. 5 mit einer zusätzlichen Schelle.

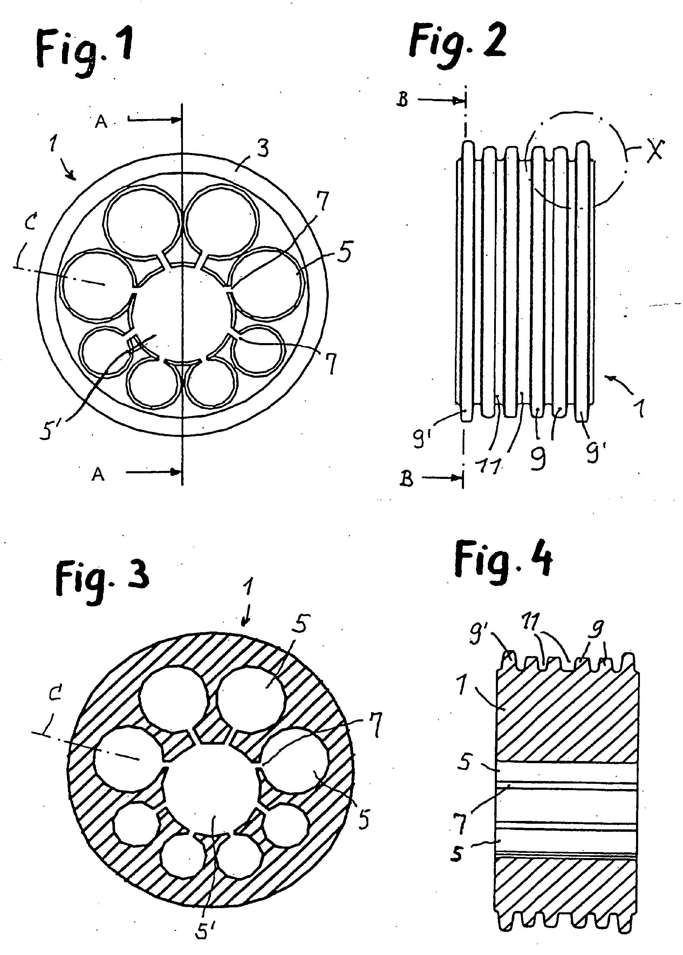

Ein Fixierstück 1 ist in Fig. 1 in Frontansicht und in Fig. 2 in Seitenansicht dargestellt. Fig. 3 und 4 zeigen Schnitte entlang den Ebenen B-B und A-A von Fig. 2 und Fig. 1. Das Fixierstück hat eine Form, die allgemein als Lochscheibe bezeichnet werden kann. Es ist einstückig aus Kunststoffmaterial, vorzugsweise aus elastomerem Material, hergestellt. Es umfasst eine ringförmige Umfangswandung 3 und, innerhalb derselben und einstückig mit dieser, eine Anordnung von mehreren kleineren kreisrunden Löchern 5, die in dem von der Umfangswandung 3 umgebenen Querschnitt in eine Anzahl von Aufnahmen 5 für die Einzelleitungen eines Leitungsbündels unterteilen. Genauer gesagt sind eine Anzahl von Aufnahmen 5 kranzförmig um eine mittlere Aufnahme 5' herum gruppiert. Die lochförmigen Aufnahmen 5 sind an ihrem Umfang nicht vollständig geschlossen, sondern an den gegenseitigen Verbindungsstellen mit Schlitzen 7 versehen. Wenn an geeigneter Stelle des Fixierstücks 1, zum Beispiel an der Linie C in Fig. 1 und 3 ein Schnitt ausgeführt wird oder bereits fertigungsmäßig vorhanden ist, kann das Fixierstück 1 aufgrund seiner elastischen Verformbarkeit aufgeklappt werden, und die Schlitze 7 ermöglichen ein Einlegen der Einzelleitungen bzw. Kabel des Leitungsbündels in die Aufnahmen 5. Es ist daher nicht nötig, die Leitungen in Längsrichtung durch die Aufnahmen 5 hindurchzuziehen.

Die Durchmesser der verschiedenen Aufnahmen 5 sind an die Durchmesser der aufzunehmenden Einzelleitungen angepasst, und zwar entweder derart, dass die Einzelleitungen Spiel in den Aufnahmen 5 haben und somit auch in Längsrichtung verschiebbar bleiben, oder aber derart, dass die Aufnahmen 5 eine Klemmkraft auf die Leitungen ausüben, so dass diese in Längsrichtung unverschiebbar fixiert werden.

Das Fixierstück 1 ist vorzugsweise scheibenförmig in dem Sinne, dass sein Außendurchmesser deutlich größer als seine Länge ist. Vorzugsweise, und wie bei der gezeigten Ausführungsform der Fall, beträgt der Durchmesser ca. das Doppelte der Länge des Fixierstücks.

Wie in Fig. 2 und 4 ersichtlich, hat der Außenumfang des Fixierstücks eine gewellte Form mit ringförmig umlaufenden Wellenrippen 9, die durch Wellennuten 11 getrennt sind. Das durch die Wellenrippen 9 und Nuten 11 gebildete gewellte Außenprofil des Fixierstücks 1 entspricht vorzugsweise dem Wellenprofil und dem Nenndurchmesser handelsüblicher Wellrohre, wie sie als Kabelschutzrohre oder dergleichen verwendet werden. Die Zahl der Wellenrippen 9 auf der Länge des Fixierstücks 1 sollte mindestens vier betragen und beträgt vorzugsweise, wie bei der gezeigten Ausführungsform, sechs.

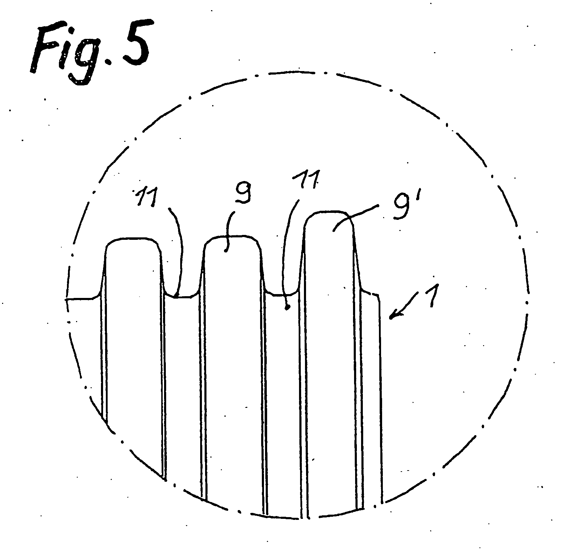

Die jeweils letzte Wellenrippe 9' an den Enden des Fixierstücks 1 hat vorzugsweise eine etwas größere Höhe als die übrigen Wellenrippen 9. Diese etwas höhere letzte Wellenrippe 9' kann das Abrutschen einer um das Fixierstück 1 gelegten Spannschelle verhindern. Um das bevorzugte Größenverhältnis der Wellenrippen 9, 9' zu erläutern, zeigt Fig. 5 eine Einzelheit bei X in Fig. 2 in vierfacher Vergrößerung.

Dank seiner äußeren Wellenform kann das Fixierstück 1 leicht mit Wellrohren gekoppelt werden, wobei Kopplungsmittel verwendet werden, wie sie zum Koppeln von Wellrohren bekannt sind und zur Verfügung stehen. Beispielsweise kann die Kopplung erfolgen mittels eines aus zwei Halbschalen bestehenden Kopplungsringes, der an einer Innenseite ein gewelltes bzw. geripptes Profil mit in die Wellennuten 11 des Fixierstücks sowie des anzukoppelnden Wellrohres eingreifenden Rippen. Ein solcher Kopplungsring kann gleichzeitig als Verschleißschutzring ausgebildet sein. Solche Verschleißschutzringe sind beispielsweise aus DE 299 20 972.5 U1 und DE 202 13 994.8 U1 sowie auch US 6 352 369 B1 bekannt. Die Gesamtoffenbarung dieser Dokumente wird durch Bezugnahme zum Bestandteil der vorliegenden Anmeldung gemacht.

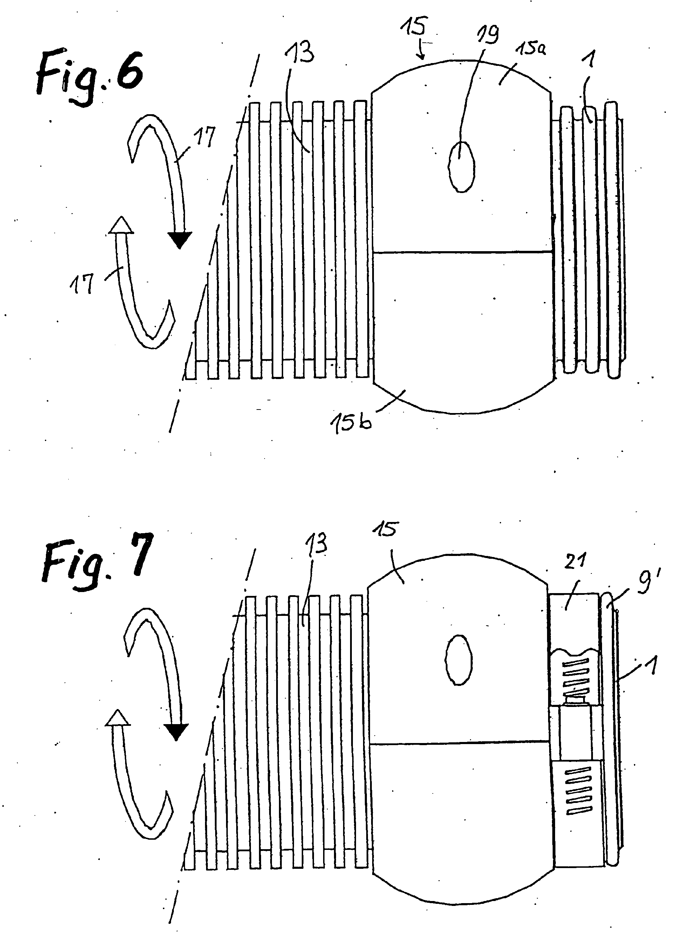

Fig. 6 zeigt die Seitenansicht des Endes eines Wellrohres 13, das durch einen als Verschleißring ausgebildeten Kopplungsring 15 mit einem Fixierstück 1 gemäß der vorliegenden Erfindung verbunden ist. Der Kopplungsring 15 ist ein Verschleißschutzring, von der aus DE 202 13 994.8 bekannten Konstruktion, die eine Drehbarkeit des Wellrohrs 13 und Fixierstücks 1 relativ zueinander im Sinne der Pfeile 17 ermöglicht. Der Kopplungsring 15 besteht aus zwei Halbschalen 15a, 15b, die durch in Bohrungen 19 angeordnete Verbindungsschrauben (nicht dargestellt) miteinander verbunden werden.

Fig. 7 zeigt die gleiche Anordnung wie Fig. 6, wobei aber auf das freie, aus dem Kopplungsring 15 herausstehende Ende des Fixierstücks 1 eine Spannschelle 21 aufgesetzt ist. Mit dieser Spannschelle 21 kann das Fixierstück 1 radial zusammengedrückt werden. Dadurch können die in dem Fixierstück 1 aufgenommenen Einzelleitungen des Leitungsbündels festgeklemmt werden. Die erhöhte letzte Wellenrippe 9' des Fixierstücks 1 sichert die Spannschelle 21 gegen Abrutschen.

## Patentansprüche

1. Anordnung aus einem Wellrohr und einem an dessen Ende befestigten Fixierstück für die Leitungen eines in dem Wellrohr verlaufenden Leitungsbündels,
wobei das Fixierstück (1) aus einem im Wesentlichen scheibenförmigen Körper besteht, der mit mindestens Teilen seines Umfangs einen kreisförmigen Umriss definiert und innerhalb des kreisförmigen Umrisses mehrere lochförmige Aufnahmen (5, 5') für die Leitungen aufweist,
wobei das Fixierstück (1) an seinem Außenumfang gewellt mit umlaufenden Wellenrippen (9) und Wellennuten (11) ausgebildet ist, und
wobei das Fixierstück (1) an das Ende des Wellrohres (13) angesetzt und mit diesem durch einen Kopplungsring (15) verbunden ist, der aneinanderstoßende Abschnitte des Wellrohrs (13) und des Fixierstücks (1) umgibt und an seiner Innenseite vorspringende Rippen aufweist, die in die Wellennuten (9) des Fixierstücks (1) und des Wellrohrs (13) eingreifen.

2. Anordnung nach Anspruch 1, **dadurch gekennzeichnet, dass** das Fixierstück über seine Länge mindestens vier, vorzugsweise sechs Wellenrippen aufweist.

3. Anordnung nach Anspruch 1 oder 2, **dadurch gekennzeichnet, dass** an mindestens einem Ende des Fixierstücks (1) die letzte Wellenrippe (9') eine größere Höhe als die übrigen Wellenrippen (9) aufweist.

4. Anordnung nach einem der Ansprüche 1 bis 3, **dadurch gekennzeichnet, dass** das Fixierstück einstückig aus Kunststoff, insbesondere elastomerem Kunststoff, besteht.

5. Anordnung nach einem der Ansprüche 1 bis 4, **dadurch gekennzeichnet, dass** der Kopplungsring (15) als Verschleißschutzring ausgebildet ist.

6. Anordnung nach Anspruch 4 oder 5, **dadurch gekennzeichnet, dass** ein aus dem Kopplungsring (15) herausragender Abschnitt des Fixierstücks (1) von einer Spannschelle (21) umgeben ist, mit der das Fixierstück (1) radial komprimierbar ist.

7. Anordnung nach Anspruch 6, **dadurch gekennzeichnet, dass** die Spannschelle (21) durch die erhöhte letzte Wellenrippe (9') des Fixierstücks (1) gegen Abrutschen gesichert ist.

## Claims

1. An assembly comprising a corrugated tube and a fixing component fastened at the end thereof for the cables of a circuit group extending in the corrugated tube,
wherein the fixing component (1) comprises a substantially disc-shaped body which defines a circular outline with at least parts of its circumference and inside the circular outline has a plurality of hole-like sockets (5,5') for the cables,
wherein on its outer circumference the fixing component (1) is of corrugated shape with continuous corrugation ribs (9) and corrugation grooves (11), and
wherein the fixing component (1) is attached to the end of the corrugated tube (13) and is connected thereto by a coupling ring (15) which surrounds mutually abutting sections of the corrugated tube (13) and of the fixing component (1), and on its inside has protruding ribs which engage into the corrugation ribs (9) of the fixing component (1) and of the corrugated tube (13).

2. An assembly according to Claim 1, **characterised in that** over its length the fixing component (1) has at least four, preferably six corrugation ribs.

3. An assembly according to Claim 1 or 2, **characterised in that** at at least one end of the fixing component (1) the last corrugation rib (9') is of greater height than the other corrugation ribs (9).

4. An assembly according to any one of Claims 1 to 3, **characterised in that** the fixing component (1) consists of one piece of plastics material, in particular elastomeric plastics material.

5. An assembly according to Claim any one of Claim 1 to 4, **characterised in that** the coupling ring (15) is in the form of an antiwear ring.

6. An assembly according to Claim 4 or 5, **characterised in that** a section of the fixing component (1) projecting from the coupling ring (15) is surrounded by a clamping collar (21) with which the fixing component (1) can be radially compressed.

7. An assembly according to Claim 6, **characterised in that** the clamping collar (21) is prevented from slipping off by the raised last corrugation rib (9') of the fixing component (1).

## Revendications

1. Ensemble composé d'un tube ondulé et d'une pièce de fixation fixée sur son extrémité pour les lignes d'un faisceau de lignes s'étendant dans le tube ondulé,
la pièce de fixation (1) se composant d'un corps essentiellement en forme de disque qui définit avec au moins des parties de sa périphérie un contour circulaire et présentant à l'intérieur de ce contour circulaire plusieurs logements (5, 5') en forme de trou pour les lignes,
la pièce de fixation (1) étant réalisée ondulée sur sa périphérie extérieure avec des nervures ondulées (9) et des rainures ondulées (11) périphériques, et
la pièce de fixation (1) étant placée au niveau de l'extrémité du tube ondulé (13) et étant reliée à celle-ci par un anneau d'accouplement (15) qui entoure des sections jointives du tube ondulé (13) et de la pièce de fixation (1) et présente des nervures saillantes sur son côté intérieur, qui s'engagent dans les rainures ondulées (9) de la pièce de fixation (1) et du tube ondulé (13).

2. Ensemble selon la revendication 1, **caractérisé en ce que** la pièce de fixation (1) présente sur sa longueur au moins quatre, de préférence six nervures ondulées.

3. Ensemble selon la revendication 1 ou 2, **caractérisé en ce que** la dernière nervure ondulée (9') présente au niveau d'au moins une extrémité de la pièce de fixation (1) une hauteur supérieure aux autres nervures ondulées (9).

4. Ensemble selon l'une quelconque des revendications 1 à 3, **caractérisé en ce que** la pièce de fixation se compose d'un seul tenant de matière plastique, en particulier de matière plastique élastomère.

5. Ensemble selon l'une quelconque des revendications 1 à 4, **caractérisé en ce que** l'anneau d'accouplement (15) est réalisé comme un anneau de protection contre l'usure.

6. Ensemble selon la revendication 4 ou 5, **caractérisé en ce qu'**une section dépassant hors de l'anneau d'accouplement (15) de la pièce de fixation (1) est entourée par un collier de serrage (21), avec lequel la pièce de fixation (1) peut être comprimée radialement.

7. Ensemble selon la revendication 6, **caractérisé en ce que** le collier de serrage (21) est bloqué contre tout glissement par la dernière nervure ondulée (9') surélevée de la pièce de fixation (1).
